# EUROPEAN PATENT SPECIFICATION

(11) **EP 3 048 088 B1**
(45) Date of publication and mention of the grant of the patent: **20.04.2022**
(21) Application number: 16152214.9
(22) Date of filing: 21.01.2016
(51) Int. Cl.: C04B 35/16, C04B 38/06, C04B 35/632, C08K 3/34, C08L 83/04

(54) **POROUS CERAMIC MATERIALS FOR INVESTMENT CASTING**
PORÖSE KERAMISCHE MATERIALIEN ZUM FEINGIESSEN
MATÉRIAUX CÉRAMIQUES POREUX POUR MOULAGE DE PRÉCISION

(30) Priority: 26.01.2015 US 201514605224
(43) Date of publication of application: 27.07.2016
(73) Proprietor: General Electric Company, Schenectady, NY 12345 (US)
(72) Inventor: HOEL, Cathleen Ann, Niskayuna, NY 12309 (US); LEMAN, John Thomas, Niskayuna, NY 12309 (US); MCNULTY, Thomas Francis, Niskayuna, NY 12309 (US); O'BRIEN, Michael Joseph, Niskayuna, NY 12309 (US); GONSALVES, Ayesha Maria, Niskayuna, NY 12309 (US); JOHNSON, Matthew Thomas, Niskayuna, NY 12309 (US); KLUG, Frederic Joseph, Schenectady, NY 12303 (US)
(74) Representative: Novagraaf Group

(56) References cited:
- WO-A1-2005/068537
- WO-A2-2013/009984
- JP-A- 2000 129 127
- JP-A- 2003 284 191
- US-A- 5 932 145
- US-B2- 7 287 573
- US-B2- 7 507 389

## Description

### BACKGROUND

This disclosure generally relates to investment casting and, more particularly, to materials for use in forming the ceramic cores and shell molds employed in investment casting.

The manufacture of gas turbine components, such as turbine blades and nozzles, requires that parts be manufactured with accurate dimensions having tight tolerances. Investment casting is a technique commonly employed for manufacturing these parts. The dimensional control of the casting is closely related to the dimensional control of a ceramic insert, known as the core, as well as the mold, also known as the shell. In this respect, it is important to be able to manufacture the core and shell to dimensional precision corresponding to the dimensions of the desired metal casting, e.g., turbine blade, nozzle, and the like.

In addition to requiring dimensional precision in the casting of the ceramic core, the production of various turbine components requires that the core not only be dimensionally precise but also be sufficiently strong to maintain its shape during the firing, wax encapsulation, shelling, and metal casting processes. In addition, the core must be sufficiently compliant to prevent mechanical rupture of the casting during cooling and solidification. Further, the core materials generally must be able to withstand temperatures commonly employed for casting of superalloys that are used to manufacture the turbine components, e.g., temperatures generally up to and above 1,000° C. Finally, the core must be easily removed following the metal-casting process. The investment casting industry typically uses silica or silica-based ceramics due to their low thermal expansion coefficient and superior leachability in the presence of strong bases.

Investment casting cores and shells can be made using low pressure injection molding techniques such as those described in United States Patent Number 7,287,573. The process described therein generally includes dispersing a ceramic powder to form a slurry in a silicone fluid, wherein the silicone fluid includes silicone species having alkenyl and hydride functionalities. In some cases, the silicone species are first dissolved in a volatile solvent, (e.g., aliphatic and aromatic hydrocarbons that can be removed by heat treatment), which are then added to the ceramic powder to form a ceramic slurry and further processed. Once a stable suspension is formed, a metallic catalyst is added and the desired part is formed. Depending on the particular binder liquid and metallic catalyst employed, a heating step may then be applied to effect a catalyzed reaction among the siloxane species, thereby curing the formed suspension into a green body. The silicone species cross-link in the core or mold, yielding a dispersion of ceramic particles in a rigid silicone-based polymeric matrix. The so-formed silicone polymeric matrix may be substantially decomposed to produce a silica char by further heating at a higher temperature.

The process described above provides improvements over previously developed processes for forming ceramic cores for investment casting. However, some opportunities for improvement still exist. For instance, the solvent-free approach may result in fairly dense material being formed in the green body; the lack of porosity may lead to size-dependent shrinkage that can lead to cracking during the firing step. This cracking can be particularly acute in cases where the feature scale (i.e. the size difference between small and large features on the core) is large. The use of a solvent in the process may at least partially address this problem, in that interconnected porosity may form in the core as a result of the solvent removal prior to the curing step. In some cases, inclusion of solvent in the process may result in the emission of volatile organic compounds (VOCs), or create a need for the use of special liquid-permeable molds designed for solvent removal.

Accordingly, there remains a need in the art for improved ceramic slurries and related processes that provide cores and other ceramic bodies, such as those used in investment casting, having desirable physical and mechanical characteristics.

Document WO 2013/009984 A2 discloses a method for creating a porous ceramic structure, the method comprising: creating a composition, wherein the composition comprises a liquid and a catalyst material disposed within the liquid; disposing the composition in any desired shape; curing the composition to form a green body; and firing the green body.

### BRIEF DESCRIPTION

Embodiments of the present invention are provided to meet this and other needs. One embodiment is a method. The method comprises creating a composition that comprises a liquid siloxane species; a plurality of particles comprising a ceramic material disposed within the liquid; a catalyst material disposed within the liquid; and a pore-forming agent that is substantially inert with respect to the siloxane species disposed within the liquid. The pore-forming agent may comprise a silicon-bearing agent that has a number average molecular weight less than about 1,300 grams per mole, a molecule having a molecular mass less than approximately 1,000 grams per mole and a freezing point between -40° C and 25° C that is soluble in the liquid, or any combination of the two. The composition is disposed in any desired shape, the pore-forming agent is volatilized, the composition is cured to form a green body, and the green body is fired.

Another embodiment is a composition. The composition comprises a liquid that comprises a siloxane species; a plurality of particles, comprising a ceramic material, disposed within the liquid; a catalyst material disposed within the liquid; and a pore-forming agent disposed within the liquid that is substantially inert with respect to the liquid. The pore-forming agent may comprise a silicon-bearing agent that has a number average molecular weight less than about 1,300 grams per mole, a molecule having a molecular mass less than approximately 1,000 grams per mole and a freezing point between -40° C and 25° C that is soluble in the liquid, or any combination of the two. The composition includes at least 30 volume percent of ceramic powder.

### DETAILED DESCRIPTION

Embodiments of the present invention include compositions and methods for fabrication of porous ceramic bodies, such as cores, for use in investment casting and in other applications where a porous ceramic structure is advantageous. Some compositions do not rely on VOC-emitting solvents to provide interconnected porosity, and in some cases may be entirely free of such solvents, thereby mitigating some of the shortcomings of previously described techniques as noted above.

One embodiment of the present invention includes a composition that may be usefully employed in, for example, a process for making a porous ceramic body; such a process is exemplified, but not necessarily limited to, the techniques disclosed in the aforementioned US 7,287,573, as well as in US 7,413,001, US 7,487,819, US 8,413,709, and U.S. Patent Application No. 14/280,993, filed 19 May, 2014, among others.

The composition is typically a slurry that includes ceramic powders dispersed within a silicon-bearing liquid; the liquid may also be referred to as a "binder" in the parlance of slurry techniques. In particular, the liquid includes a siloxane species, for instance, (a) one or more siloxane polymers-such as (but not limited to) the so-called "Room Temperature Vulcanizable," (RTV) systems well known in the silicones art, including as an example RTV 615 (trade name of Momentive Performance Materials), as well as other such silicone formulations that contain polymeric inputs; (b) siloxane monomers; and/or (c) siloxane oligomers. The siloxane species may include alkenyl and hydride functionalities. The siloxane species used in the liquid is of a type referred to in the art as "curable" or "reactive," meaning that under a given set of processing conditions, the species will undergo a cross-linking ("curing") reaction; the process of curing is described in further detail, below.

The siloxane species having alkenyl functionalities that may be used as a binder liquid in the composition described herein are alkenyl siloxanes of the general formula (I): 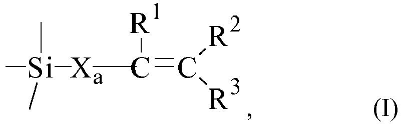 wherein R¹, R², and R³ each independently comprise hydrogen or a monovalent hydrocarbon, halocarbon, or halogenated hydrocarbon radical; X a divalent hydrocarbon radical; and a is a whole number having a value between 0 and 8, inclusive. The terms "monovalent hydrocarbon radical" and "divalent hydrocarbon radical" as used herein are intended to designate straight chain alkyl, branched alkyl, aryl, aralkyl, cycloalkyl, and bicycloalkyl radicals.

The siloxane species that include hydride functionalities are hydrosiloxanes having hydrogen directly bonded to one or more of the silicon atoms, and therefore contain a reactive Si-H functional group.

Examples of alkenyl siloxanes useful in the present disclosure include polyfunctional olefinic substituted siloxanes of the following types: 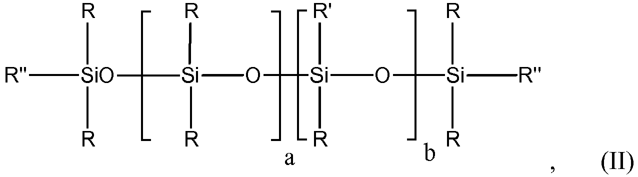 wherein R is a monovalent hydrocarbon, halocarbon, or halogenated hydrocarbon; and R' is an alkenyl radical such as vinyl, or other terminal olefinic group such as allyl, 1-butenyl, and the like. R" may include R or R', a = 0 to 200, inclusive, and b = 1 to 80, inclusive, wherein a and b are selected to provide a fluid with maximum viscosity of about 1,000 centistokes, and such that the ratio of b/a allows for at least three reactive olefinic moieties per mole of siloxane of formula (II) above.

Suitable alkyl/alkenyl cyclosiloxanes are of formula (III):

[RR'SiO]x, (III)

wherein R and R' are as previously defined, and x is an integer 3 to 18 inclusive.

Other suitable functional unsaturated siloxanes may be of the formula (IV): 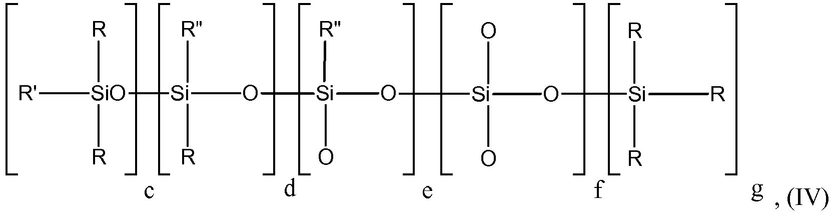 wherein R, R', and R" are as previously defined. In some embodiments, the ratio of the sum of (c+d+e+g)/f is ≥ 2.

Examples of unsaturated siloxanes include 1,3-divinyl-tetramethyldisiloxane, hexavinyldisiloxane, 1,3-divinyltetraphenyldisiloxane, 1,1,3-trivinyltrimethyldisiloxane, 1,3-dimethytetravinylldisiloxane, and the like. Examples of cyclic alkyl-or arylvinylsiloxanes include 1,3,5-trivinyl-1,3,5-trimethylcyclotrisiloxane, 1,3,5,7-tetravinyl-1,3,5,7- tetramethylcyclotetrasiloxane, 1,3-divinyloctaphenylcyclopentasiloxane, and the like.

Suitable polyfunctional hydride siloxanes include compositions depicted below: 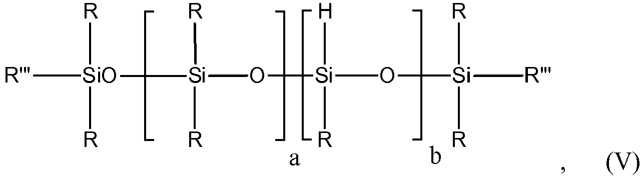 wherein R is as defined previously, R'" may include R or H, and a and b are defined as above, and selected such that the ratio of b/a allows for at least three reactive Si-H moieties per mole of siloxane of formula (V) above.

Suitable alkyl/hydride cyclosiloxanes are of formula (VI):

[HRSiO]x, (VI)

wherein R is as previously defined, and x is an integer 3 to 18 inclusive.

Other suitable functional hydride siloxanes include: 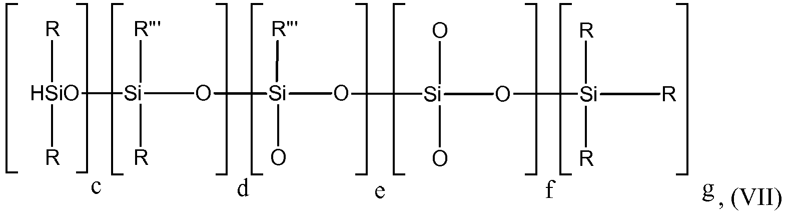 wherein R and R'" are as previously defined. In some embodiments, the ratio of the sum of (c+d+e+g)/f is ≥ 2.

Examples of siloxane hydrides include poly(methylhydrogen)siloxane, poly[(methylhydrogen)-co-(dimethyl)]siloxane; 1,3,5,7-tetramethylcyclotetrasiloxane, 1,3,5,7,9-pentamethylcyclopentasiloxane, and other cyclic methylhydrogen siloxanes; tetrakis(dimethylsiloxy)silane, and organically modified resinous hydride functional silicates corresponding to Formula (VII), with the composition [HSi(CH₃)₂O_{1/2}]₂ (SiO₂).

The siloxane species in the liquid may be selected so as to include at least one alkenyl and hydride siloxane as described above.

Additional terminally functional alkenyl or hydride siloxanes described below in formulas (VIII) and (IX), alone or in combination, may be added to augment the matrix composition in order to adjust the viscosity of the uncross-linked matrix, effect changes in the cured green body hardness, strength and strain, and so on, as would be apparent to those skilled in the art in view of the present disclosure. 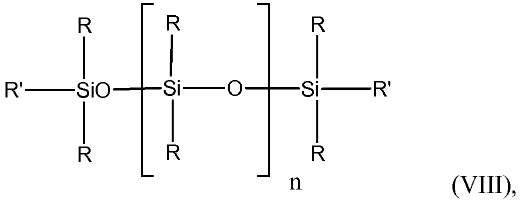 and 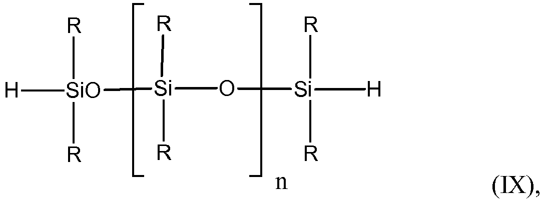 wherein R and R' are as previously defined; and n = 0 to 500, in some embodiments 0 to 30, and in particular embodiments 0 to 10.

It should also be apparent that in some embodiments a satisfactory cross-linked network may be effected by combining one component from each of A) a polyfunctional alkenyl or polyfunctional hydride siloxane, as defined in Formulas (II) - (IV) or Formulas (V) - (VII), respectively; and B) a terminally functional alkenyl or hydride siloxane as defined in Formulas (VIII) or (IX) respectively, restricted only such that the composition contains both an alkenyl and a hydride functional species to allow cross-linking between the complementary alkenyl and hydride reactive functional groups.

The viscosity of the liquid binder, its theoretical cross-link density, and resultant silica char yield may be adjusted using the appropriate siloxane species and the stoichiometric ratio of total hydride to alkenyl reactive functional groups. For instance, the viscosity of the composition can vary from about 1 to about 6000 centistokes, in some embodiments from about 1 to about 300 centistokes, and in particular embodiments from about 1 to about 100 centistokes. The theoretical cross-link density, as represented by the number average molecular mass of the shortest formula repeat unit distance between reactive hydride or alkenyl functional cross-link sites (abbreviated for the purposes of this description as *MW*_{c},), can vary in some embodiments from about 30 to about 4,100 g/mole, in some embodiments from about 30 to about 500 g/mole, and in particular embodiments up to about 150 g/mole. In other embodiments, such as embodiments in which the binder includes a siloxane polymer, the *MW*_{c} can be much higher, such as, for example, up to about 35,000 g/mole. In some embodiments, the *MW*_{c} is in the range from about 10,000 g/mole to about 35,000 g/mole. Such comparatively high *MW*_{c} binders, when processed in accordance with the techniques described herein, may result in a softer, more compliant material with higher strain to failure (in the green to dried state) and with lower cure shrinkage than with lower *MW*_{c} binders. To produce a suitably hard and resilient cured material, the hydride to alkenyl molar ratio is generally in the range from about 0.5 to 3, in some embodiments in the range from about 0.5 to 2, and particular embodiments in the range from about 1.0 to 1.75. In the particular case of 1,3,5,7-tetramethylcyclotetrasiloxane and 1,3,5,7-tetravinyl-1,3,5,7-tetramethylcyclotetrasiloxane, combinations in molar ratios from 0.5 to 2 gave silica yields upon pyrolysis of the cured matrix at 1,000 °C in air from 74 to 87% of the original mass.

Generally, the amount of reactive siloxane species included in the ceramic slurry significantly affects the degree of hardness of the resulting solid, shaped product. Using too low an amount may result in unacceptably low strength, while too high an amount may result in material that is difficult to process or lacks sufficiently high ceramic solids content to provide the desired properties. The selection of a desired reactive siloxane species amount (that is, the amount of binder) thus depends on the target application and the nature of the other inputs used in the composition. For example, depending on the amount of other components such as ceramic powder that is present, a useful green product can be formed using greater than about 5 volume percent of the reactive siloxane species, with some embodiments employing from about 20 volume percent to about 40 volume percent of reactive siloxane species as binder liquid relative to the total volume of the composition. In certain embodiments, the one or more reactive siloxane species comprises about 22 to about 37 volume percent of the slurry composition, a range that has been found particularly useful for producing articles for use in investment casting processes, though such applications are not exclusively limited to the use of compositions within this range.

The composition further comprises a catalyst material, such as a metal-containing catalyst. Cross-linking of the siloxane species may be accomplished by utilizing a catalyzed reaction of the alkenyl groups and the silicon-bonded hydrogen groups. Catalysts suitable for such reactions are well known and widely used in the art, including, for example catalysts that include metals such as platinum (Pt), rhodium, iron, palladium, or combinations thereof, usually present in the form of compounds of such metals. Specific examples include, but are not limited to, the Pt divinylsiloxane complexes as described by Karstedt in US Patent No. 3,715,334 and US Patent No. 3,775,452; Pt-octyl alcohol reaction products as taught by Lamoreaux in US Patent No. 3,220,972; the Pt-vinylcyclosiloxane compounds taught by Modic in US Patent No. 3,516,946; and Ashby's Pt-olefin complexes found in US Patent Nos. 4,288,345 and 4,421,903. Often, catalyst is added as a final ingredient to a pre-mixed slurry just prior to use of the slurry; even at room temperature there is a certain rate of gelling that may occur as the catalyst promotes cross-linking of the binder liquid. Optionally, inhibitors may be added along with the catalyst to prevent undue premature gelling before a part is cast. Such inhibitors are well known in the art, an example of which is provided in US Patent No. 4,256,870. Once the slurry mixture is heated, the reaction rate is relatively high whereby polymerization and cross linking of the species is achieved in a practical time span. The amount of metallic catalyst included in the slurry mixture is generally small as compared with the amount of species in accordance with conventional curing and cross-linking methods.

Ceramic powders suitable for use in the present disclosure include, but are not intended to be limited to, oxides, carbides, and/or nitrides; specific examples of such materials include, without limitation, alumina (such as fused alumina), fused silica, magnesia, zirconia, spinels, mullite, glass frits, tungsten carbide, silicon carbide, boron nitride, silicon nitride, and mixtures thereof. In particular embodiments, the ceramic powder includes at least some silica, mixtures of silica and zircon, or mixtures of silica and alumina. The ceramic powder in part provides mechanical integrity for the finished product produced from the slurry composition, and the amount of powder added to the composition contributes to, among other things, the flow properties of the composition and the strength of the green and finished product. In some embodiments, the slurry composition includes at least about 30 volume percent of the ceramic powder, and in particular embodiments, at least about 50 volume percent. In many applications, an excessively high concentration of ceramic powder in the slurry composition may adversely affect the flow properties, rendering the slurry too resistant to flow to allow practical injection or other processing operations. Accordingly, in some embodiments the composition includes up to about 70 volume percent ceramic powder.

The particle size distribution of the ceramic powder may be selected to attain desired rheological properties for the composition, which in turn will depend in part upon the desired application of the composition. Similarly, the powder morphology, including sphericity/angularity, aspect ratio, and the like, may also be optimized for a given application.

Other additives that may be present in the ceramic powder include, but are not intended to be limited to, aluminum, yttrium, hafnium, yttrium aluminate, rare earth aluminates, colloidal silica, magnesium, zircon, and/or zirconium for increasing refractory properties of the ceramic body. Alkali and alkaline earth metallic salts are added in some instances to effect devitrification of amorphous silica and promote the formation of cristobalite, leading to a dimensionally stable ceramic body, as desired for precision investment casting. Moreover, various dispersants for ceramic powders are known in the art and are appropriate for use in the present techniques. Care should be exercised, however, to select a dispersant that does not interact with the other components of the slurry composition. A particular dispersant may be evaluated for suitability with a particular combination of material components by mixing small amounts of the respective components and judging the flow properties of the resultant mixture, whether the resultant mixture exhibits a notable yield point, and/or whether the mixture exhibits pseudoplastic behavior. Typical dispersants include stearic acid, oleic acid, and menhaden fish oil. Generally, the dispersant is used in a small amount, by volume, as compared with the amount, by volume, of the ceramic powder included in the mixture.

Further substances may be added to, for instance, modify the ceramic powder surfaces for improved dispersion, for better flow of the slurry, or for enhanced mechanical properties by providing for covalent bonding between an agent absorbed on the surface and a complimentary reactive functionality in the liquid siloxane matrix. These surface-modifying agents may include reactive amino- or alkoxy silanes such as hexamethyldisilazane or methyltrimethoxysilane. Examples of a liquid siloxane matrix-reactive agent may include substances such as 1,3-divinyl tetramethyl disilazane or vinyltriethoxysilane. For purposes of powder surface treatment, enhancement of the above properties may result merely from addition of the agent to the liquid siloxane and powder mixture during processing. Enhancement may also be effected by treatment of the powder surface with the surface-modifying agent in a separate step prior to slurry compounding, either in the liquid phase, in more dilute solution in the presence of a solvent, or in the gas-phase; treatment may be performed at room temperature or at elevated temperature to speed reactivity and extent of reaction. These and other aspects of surface functionalization are well-known in the art.

The composition further comprises a pore-forming agent. As mentioned above, conventional approaches to ceramic body processing often results in a dense as-cured body that is relatively impermeable to gaseous species entering or exiting the body. Post-cure processes involve pyrolyzing the core-i.e. converting silicone to silica- which involves the formation and/or release of gases. A lack of permeability in the body may lead to structural differences, particularly in features of differing cross-sectional area. These structural differences may manifest themselves as shrinkage differences that may cause cracks to form in the body. Porosity in the as-cured body, created by the inclusion of a pore-forming agent, may enable a more rapid transit of gaseous species, which in turn may reduce the dimensional dependence of shrinkage. Increasing pore volume by increasing pore size, number, and/or interconnectedness may advantageously enhance such properties.

A pore-forming agent is a component of the composition (often, but not necessarily always, a liquid component) that is removed before the cross-linking reaction that occurs during curing of the binder liquid, or does not otherwise substantially decompose during processing or substantively participate in such cross-linking reaction. A pore former may be removed by being volatized, before or after curing, such as by sublimation or evaporation. For example, a composition containing a pore former may be freeze-dried before curing, causing volatilization of the pore-former and loss thereof from the composition, yielding a core or mold with a plurality of pores within a cross-linked material matrix once the composition is subsequently cured. Or, after being cured to its green state, a core or mold can be heated to volatilize pore-former remaining therein, leaving behind such a plurality of pores within the cross-linked material matrix.

A pore-forming agent removed before curing in embodiments of the invention may include a molecule with a molecular mass less than approximately 1,000 g/mol and a freezing point between -40° C and 25° C that is non-reactive but soluble in the siloxane binder in the composition. Such agent has appropriate volatility such that either it does not significantly volatilize during handling or other activity before freeze-drying or any volatilization that occurs before freeze-drying can be compensated for by adding more pore-forming agent. It is also substantially inert with respect to the liquid binder, meaning that it does not chemically react with the liquid binder under typical processing conditions to a degree that would significantly reduce the amount of agent present before freeze-drying. Furthermore, it is stable in that it undergoes no substantial decomposition or other chemical change while present in the material. If volatilization of only the pore-forming agent during freeze-drying is preferred, a pore-forming agent should be selected such that its vapor pressure is substantially higher than the vapor pressure of all other binder components at the temperature at which freeze-drying is performed. Examples of such a pore-forming agent include, but are not limited to, cyclohexane, benzene, p-xylene, o-xylene, cyclooctane, cyclononane, bicyclohexyl, tridecane, dodecane, 3,4-dichlorotoluene, cycloundecane, cycloheptane, 2,2,3,3-tetramethylpentane, and 2,2,5,5-tetramethylhexane.

A pore-forming agent that is removed after curing in embodiments of the invention may include, and in some cases may be made entirely of, a silicon-bearing material such as a silane, a siloxane, or mixtures of such. Such a pore-forming agent, therefore, is advantageously free of current VOC emission-regulated substances such as hydrocarbon-based solvents. It has a number average molecular mass less than about 1,300 g/mol, and is substantially inert with respect to the liquid binder, meaning that it does not participate in the curing reactions of the liquid binder under typical processing conditions to a degree that would significantly reduce the amount of agent present after curing. Such pore-forming agent may also be of low or limited miscibility in the binder used, to enhance its phase separation from the rest of the composition during curing and resulting in larger pore diameters upon its removal. Furthermore, it is stable in that it undergoes no substantial decomposition or other chemical change while present in the material. It also has appropriate volatility such that it does not significantly volatilize until post-cure processing, after curing of the material. Use of pore-forming agents that are miscible in a given binder system but show phase separation during a cure step may be particularly advantageous.

The average molecular weight of a silicon-bearing pore-forming agent is often correlated with its volatility; in certain embodiments, the number average molecular mass of the silicon-bearing agent is at least about 150 grams per mole, and in particular embodiments at least about 200 grams per mole. In some embodiments, the number average molecular weight of the agent may range from either of these lower values up to about 500 grams per mole

Examples of silicon-bearing materials suitable for use as, or in, the pore-forming agent include cyclic siloxanes and linear siloxanes. Cyclic siloxane compositions of use as pore-forming agent have a general formula of

[RRSiO]ₓ (X),

where x is an integer from 3 to 18 and each R can be, independently, any of the R as previously defined, except for groups such as, for instance, alkenyl or hydride groups, that substantially react with the binder liquid. One example of a cyclic siloxane is decamethylcyclopentasiloxane, often referred to in the art as D₅ and commonly available commercially in substantially pure form as, for instance, Momentive SF1202 or Dow-Corning 245 fluids. D₅ has been shown in experiments to possess especially favorable stability and volatility characteristics; this, combined with its general availability, make it a particularly attractive choice for use as the pore-forming agent. Another example is 1,3,5-tris(3, 3, 3-trifluoropropyl) trimethylcyclotrisiloxane, also known in the art as D₃^{F}. In addition to substantially pure, single components, commercially available mixtures of cyclic siloxanes may also be advantageously employed, for example: Dow-Corning 246, Dow-Corning 344, Dow-Corning 345, Dow-Corning 702, Momentive SF1204, Momentive SF1256, Momentive SF1257, and Momentive SF1258 fluids.

Examples of suitable linear siloxanes include without limitation siloxanes following the formula R₃SiO(SiR₂O)ₓSiR₃ , where R is as defined previously for Formula (X), and x = 0 - 15. Specific examples of suitable linear siloxanes include without limitation hexamethyl disiloxane, octamethyl trisiloxane, decamethyl tetrasiloxane, and dodecamethyl pentasiloxane; commercially available silicone fluids such as Dow-Corning 704 (tetramethyltetraphenyltrisiloxane), Dow-Corning OS-10, OS-20, and OS-30; linear PDMS mixtures such as the Dow-Corning 200 fluids or equivalent Xiameter PMX-200 fluids in the viscosity ranges from 0.65 to 10 cStokes

Examples of suitable branched siloxanes include without limitation T- or Q-functional compounds following the formula (R₃SiO)₃SiR or (R₃SiO)₄Si, where R is as defined previously for Formula (X). Specific examples of suitable branched siloxanes include without limitation phenyl-tris(trimethylsiloxy)silane, methyl-tris(trimethylsiloxy)silane, 3,3,3-trifluoropropyl-tris(trimethylsiloxy)silane, and tetrakis(trimethylsiloxy)silane.

Other examples of silicon-bearing materials include silanes. Examples of suitably non-reactive silanes include, without limitation, phenyltrimethylsilane, tetra-n-butylsilane, p-tolyltrimethylsilane, methyltri-n-trioctylsilane, dimethyldiphenylsilane, and methyltri-n-hexylsilane.

In some embodiments, using a mixture of pore-forming agents possessing vapor pressures at given temperatures that differ from each other, as opposed to a pure substance with a single vapor pressure at given temperatures, may be advantageous. When such a mixture is used, the temperature and/or pressure ranges over which the bulk of the agent's volatilization occurs during its removal, pre- or post-cure, is spread out across a broader range, rather than having all of the agent in the composition subliming or evaporating at a single temperature or pressure, thereby decreasing the probability of damaging the green body from internal pressures caused by trapped vapor accumulation. In other embodiments, a mixture of two or more pore-forming agents, a portion of which is suitable for pre-cure removal and another portion of which is suitable for post-cure removal, may be used, to advantageously distribute volatilization across a broader range of conditions.

The amount of a pore-forming agent present in the composition is a significant factor in determining the porosity of the "green body", that is, the material that remains after curing the binder and the pore-forming agent has been removed (whether before or after curing). Typically the pore-forming agent is present at a concentration of at least about 5 percent by volume of the entire composition to form a sufficiently percolated network to enable the transit of gases during processing of the green body. In particular embodiments, a comparatively high degree of porosity in the porous green body, such as at least about 7 volume percent, is desirable to increase the likelihood of forming an interconnected network of pores throughout the green body. On the other hand, depending on the application, porosity in some cases may be desirably controlled so as not to exceed a certain amount to maintain acceptable strength in the green body and/or end product. In some embodiments this upper limit of porosity is about 35 percent by volume, and thus in particular embodiments the pore-forming agent is present in the composition at a concentration in a range from about 7 volume percent to about 35 volume percent of the entire composition. In other embodiments, the upper limit of the pore-forming agent may be dictated by the volume fraction of other components of the composition, such as the ceramic powder. Where a composition has a relatively low loading of ceramic powder, more volume is available for pore-forming agent, and thus, if service conditions for the green product and/or the finished product allow, even higher amounts of pore-forming agent may be feasible.

One particular embodiment that applies advantages described above is a composition that includes, at least in part, a liquid ("binder") comprising a siloxane species as noted previously, the siloxane species comprising an alkenyl functional group and a hydride functional group; a plurality of particles, comprising a ceramic material, disposed within the liquid; a catalyst material comprising a metal, and disposed within the liquid; and a pore-forming agent disposed within the liquid, wherein the pore-forming agent comprises cyclohexane and is present in the composition at a concentration in a range from about 5 volume percent to about 35 volume percent of the composition.

Another embodiment that applies advantages described above is a composition that includes, at least in part, a liquid ("binder") comprising a siloxane species as noted previously, the siloxane species comprising an alkenyl functional group and a hydride functional group; a plurality of particles, comprising a ceramic material, disposed within the liquid; a catalyst material comprising a metal, and disposed within the liquid; and a pore-forming agent disposed within the liquid, wherein the pore-forming agent comprises 1,3,5-tris(3, 3, 3-trifluoropropyl) trimethylcyclotrisiloxane and is present in the composition at a concentration in a range from about 5 volume percent to about 35 volume percent of the composition.

As noted previously, the composition described herein may be applied to fabricate a porous ceramic body, such as, for example, a core or a shell for use in investment casting techniques. The composition is disposed in a desired shape, such as by placing the composition into a die that is the shape of a core, or such as by coating the composition over a pattern to create a shell according to practices known in the art, and the siloxane species are cured (thereby forming a silicone-based polymeric matrix as noted previously). The pore-forming agent is volatilized, either before or after curing, to drive the agent out of the polymeric matrix, leaving behind a plurality of pores within the matrix and thereby resulting in the formation of a porous green body. The green body may then be heated to produce a ceramic body.

It will be appreciated that in forming articles such as shells, for instance, repeated cycles of coating (such as by dipping a form into a quantity of slurry composition) and curing may be employed to build up a desired shell thickness. Advanced layer-by-layer techniques by so-called "additive manufacturing" methods may also be employed to create complex objects, such as cores and other articles, using the composition, whereby a thin layer of the composition is disposed in a desired shape (such as by injection via a printer nozzle or other deposition equipment), the composition is cured, and then further successive deposition/cure cycles are employed, building up mass layer-by-layer in accordance with a three-dimensional part design, until a part of desired shape is fabricated. In techniques that employ a layer-by-layer approach, the pore-forming agent may be removed at any convenient point in the process, such as (but not limited to) after all layers have been deposited and cured. The compositions used to create different layers may include pore-formers that differ from each other to modify the relative porosity of different lamina of a green body so formed and, ultimately, cross-sectional uniformity and/or strength of the final ceramic product. For example, a pore-forming agent used in creating one layer may be appropriate for pre-cure removal while for that used in another layer may be appropriate for post-cure removal. Or, ranges of pore-formers' vapor pressures in the compositions used to create different layers may otherwise differ.

If the catalyst is not already present in the slurry composition, it may be added before the molding process. The composition is then transferred, e.g., by extrusion, pouring, syringe transfer, pressing, gravity transfer, and the like, into a closed cavity of the mold. Where extrusion is used, the composition is extruded, for example under low pressure (less than 50 psi), into a die and then cured. The curing process is often accomplished with heat for rapid manufacturing. However, room temperature gelation may be desirable where a metal component (if present) reactivity is excessive, e.g. aluminum, wherein the metal component is disposed to react with available organic matter to produce undesirable hydrogen gas bubbles. Other molding techniques, including injection molding, may also be employed. Moreover, any conventional additives known in the ceramic processing arts, for example, mold release agents, may be included in the composition for their known functions.

The temperature at which curing, that is, polymerization and/or cross-linking, is desirably carried out in this method ("curing temperature") depends in large part on the particular metallic catalyst compound and the particular species that are included. The curing temperature is typically selected to be greater than about room temperature, such as at about room temperature to about 120° C, and in particular embodiments about 50°C to about 100°C. Similarly, the time necessary to form a firm polymer-solvent gel matrix is dependent on the particular components of the composition. Generally, the mold containing the slurry composition is heated at an elevated temperature (i.e., greater than room temperature) for at least about five minutes, and in some embodiments is heated for a period of about 5 to about 120 minutes, to polymerize and cross-link the siloxane species and form a firm silicone-based polymer matrix.

In some embodiments, before the cure step, the composition may be brought to a freeze-drying temperature below the freezing point of the pore-forming agent, while the pore-forming agent remains present but unreacted, thus persisting to occupy space within the composition. A desired porosity may also be obtained by causing phase-separation between the pore-forming agent and the remaining components of the shell or core composition by bringing the composition to such a freeze-drying temperature. The pore-forming agent is then removed and the space formerly occupied by the pore-forming agent becomes desirable porosity within the green body formed after subsequent curing. Removal of the pore-forming agent is typically accomplished by lowering the atmospheric pressure below the vapor pressure of the pore-forming agent at the freeze-drying temperature, at which volatilization of the agent is accomplished within a desirable time frame. To preferentially volatilize the pore-forming agent during freeze-drying, a pore-forming agent may be selected such that the vapor pressure of the pore-forming agent is substantially higher than the vapor pressures of all other binder components at the freeze-drying temperature. Temperature and/or pressure may remain constant throughout the entire method, or may be increased or reduced, during the agent removal step to assist in attaining preferred rates and duration of volatilization of the solidified pore-former. In some embodiments, the atmospheric pressure may be maintained near the vapor pressure of the pore-forming agent to slow volatilization of the pore-former during processing, because vapor production that occurs too quickly may cause vapor accumulation internal to the green body, increasing risk of damage to the body. A typical range for the freeze-drying temperature is down to about -40°C, but of course will in part depend on specific material choices made in formulating any particular instance of the composition.

In other embodiments, during the cure step, the pore-forming agent remains present but unreacted, thus persisting to occupy space within the cured matrix. A desired porosity may also be obtained by causing phase-separation between the pore-forming agent and the remaining components of the shell or core during the cure step. The pore-forming agent is then removed after curing under temperature and pressure conditions suitable to effect volatilization of the agent, and the space formerly occupied by the pore-forming agent becomes desirable porosity within the resultant green body. Removal of the pore-forming agent is typically accomplished by heating to a drying temperature at which temperature, for a given pressure, volatilization of the agent is accomplished within a desirable time frame. Ambient processing pressure may remain constant throughout the entire method, or may be adjusted, such as reduced, during the agent removal step to assist in efficient liquid volatilization. In certain embodiments, the drying temperature is greater than the temperature used to cure the composition, to ensure that the agent persists throughout the cure treatment. In some embodiments, the drying temperature is maintained below the boiling point of the pore-forming agent to better control the evolution of vapor during processing, because vapor production that occurs too quickly may cause vapor accumulation in the cured body, increasing risk of damage to the body. A typical range for the drying temperature is up to about 300°C, but of course will in part depend on specific material choices made in formulating any particular instance of the composition.

In some aspects, a composition described herein may provide enhanced dimensional control compared with conventional systems, in part through better dimensional stability during the drying step. For example, filler particles trapped within a cured resin may tend to remain in place, limiting the particle rearrangement commonly observed during drying of conventional systems. As a result, drying shrinkage in embodiments of the present invention may be significantly decreased compared to conventional slurry-cast systems.

The porous green body may be subsequently heated ("fired") to decompose the silicone-based polymer of the green body, thus forming a ceramic body that includes silica from the decomposed polymer and ceramic material from the powder originally suspended in the slurry composition. Firing may be accomplished by heating at a firing temperature, for example, greater than about 475°C. Moreover, the ceramic body thus formed may be further processed as desired; for instance, the ceramic body may be sintered to form a body of adequate density for use in investment casting. Sintering temperatures for various ceramic powders are well known in the art. In a particular example, the porous green body may be heated in a conventional kiln under an oxygen-containing atmosphere to a temperature of about 900° C to about 1,650° C for an aggregate period of about 2 to about 48 hours. The heating rate is typically, but not necessarily, from about 5° C per hour to about 200° C per hour.

The resultant ceramic body may be employed in an investment casting process, such as by using the body as a mold core. In such embodiments, the ceramic body has a shape that conforms to a desired shape for an internal cavity in the part to be fabricated by investment casting. For example, the ceramic body may have a shape corresponding to the internal cooling passages of a fluid-cooled machine component, such as an air-cooled turbine blade. In keeping with well-known methods for investment casting, the ceramic body is disposed within an investment casting mold cavity, molten metal is poured or otherwise disposed within the mold cavity (thereby immersing the ceramic body), and then the molten metal is solidified within the mold. The ceramic body (core) is removed by chemical leaching or other method, leaving behind a space within the solidified metal part.

### EXAMPLES

The following examples are presented to further describe the techniques, but should not be read as limiting, because variations still within the scope of embodiments of the present invention will be apparent to those skilled in the art.

### Comparative Example

A ceramic slurry composition with the reactive siloxane binder system and powder mixture was produced by combining the listed ingredients in the proportions specified in Table 1, below, to make Formulation A. The reactive siloxanes were 1,3,5,7-tetravinyl 1,3,5,7-tetramethylcyclotetrasiloxane (also known in the art as D₄^{Vi}) and a hydride-functional organosilicate resin (CAS registry number 68988-57-8 corresponding to Formula (VII) with the composition [HSi(CH₃)₂O_{1/2}]₂ (SiO₂), also known in the art as an M^{H}Q resin).. The mass ratio of the reactive siloxanes was maintained to give an approximately 1:1 Si-H to vinyl molar ratio. Anhydrous sodium tetraborate was additionally included as a mineralizer to enhance the conversion of amorphous silica to cristobalite during sintering.

**Table 1: Comparative Example Slurry Composition**

| Component | Wt % |
|---|---|
| D₄^{Vi} | 7.27 |
| M^{H}Q resin | 9.69 |
| Na₂B₄O₇ | 0.42 |
| fumed silica | 1.06 |
| Zircon | 39.76 |
| fused silica | 41.80 |
| Total | 100.00 |

The above composition represents a ceramic slurry with a ceramic (zircon + silicas) loading of about 63% by volume. The components were mixed in a DAC1100-FVZ HS dual asymmetric centrifuge (Flacktek, Landrum, SC), with intermittent hand-mixing, for a total of 3 minutes, 10 seconds mix time at 1600 RPM. After cooling, the slurry was catalyzed by addition of 9.4 microliters of Karstedt's-type platinum catalyst (Heraeus CPPT3130, 10 % Pt by weight) per 100 parts by weight of slurry. The resultant catalyzed slurry was transferred into 6 oz. cartridges, degassed under reduced pressure, then injected into fugitive organic polymeric, plastic and metal molds using a manual caulker cartridge gun (Techon Systems).

To create test bars for testing shrinkage and flexural strength, molds were rectangular-shaped with internal dimensions 4" × 0.625" × 0.2" (L × W × H). The filled test bar molds were then heated for 15 hours in an air-circulating oven at 50 °C to cure the reactive siloxane binder matrix.

After curing was completed, the cured test bar specimen/molds were loaded into an electric furnace and fired in an air atmosphere to a terminal temperature of 1000 °C for 3hrs, with intermediate isothermal holds for 3 hrs. each at 150, 175, 200, 300, 500, and 650 °C. Following sintering at 1000 °C, the furnace was turned off and the contents allowed to cool naturally back to room temperature. After firing, the net linear shrinkage was measured with calipers and the room temperature MOR (modulus of rupture) of the resultant sintered ceramic test bars was measured on an Instron 4465 load frame in 4-point bend mode.

Permeability to air was measured as an indication of total open pore volume and pore size. Test specimens for permeability measurements were fabricated by either of two methods, referred to herein as Method 1 and Method 2. For Method 1, slurry was injected into a 1" diameter cylindrical mold at least 1" long. The slurry was cured at 50 °C to form a slug and 1"-diameter disks of desired thicknesses were cut from the slug with a wet diamond saw and excess water and particulate were cleaned off of the specimen. For Method 2, slurry was injected into disk molds with diameters of 1.1 - 2.5" and thickness of 0.074". Slurry was cured in molds at 50 °C then mechanically removed from molds. Disks were measured as prepared or after heating to desired temperatures to remove pore-former and/or firing them to form a ceramic body. Permeability was measured with a capillary flow porometer by measuring the volumetric flow rate of air across a circular area with a fixed diameter of 1.27 cm and applied pressure differential of 1 atmosphere.

### Example 1

Comparable 63 volume % ceramic solids slurry formulations and cylindrical specimens for permeability measurements and rectangular test bars were produced and fabricated in the same fashion as described for the Comparative Example, but with decamethyl cyclopentasiloxane (D₅) or 1,3,5-tris(3, 3, 3-trifluoropropyl) trimethylcyclotrisiloxane (also known in the art as D₃^{F}) added to the slurry mixture as a pore-forming agent. Formulations B and C were produced, with 15 % of the total slurry volume comprising D₅, or D₃^{F}, respectively, with the volume fraction of the reactive siloxane mixture reduced accordingly to maintain a constant 63 volume % ceramic solids loading in the uncured mixture.

The prepared slurries were catalyzed and injected into cylindrical (for measuring permeability and loss of pore-former during drying) test molds and rectangular (for measuring shrinkage and flexural strength) test bar molds and cured as in the Comparative Example. Test disks for measuring permeability were fabricated following the procedure outlined in Method 1 where the thickness of the disks made from Formulation A were 0.085", the thickness of disks made from Formulation B were 0.055" and the thickness of disks made from Formulation C were 0.013". The permeability values account for the different thicknesses and can be compared to one another. After curing but before firing, test disks were heated in an air-circulating oven for post-cure pore-former removal. Temperature was raised at a rate of 5 °C/hr until a temperature of 120 °C was reached, which temperature was then held for 10 hours. Temperature was then again raised at a rate of 5 °C/hr until a temperature of 160 °C was reached, which temperature was then held for 24 hours. Cured samples were weighed before drying at 120 °C - 160 °C and after such drying to determine percentage of pore-former that was removed by drying at 120 °C - 160 °C. Test bars were fired to 1000 °C and tested as in the Comparative Example. Mean test values for Formulations A-C are given in Table 2.

**Table 2: Test Data for Pre- and Post-Fired Ceramic Parts Fabricated from Slurry Compositions Containing 15 Volume % D₅ or D₃^{F} as Pore-Former**

| Sample ID | Pore-Former | Pore-Former Loss at 160 °C | 160 °C Dried Pre-Firing Air Permeability (cm²/(sec-atm)) (±95% CI) | 1000 °C Fired Linear Shrinkage (±95% CI) | 1000 °C Fired Flexural Strength (psi) (±95% CI) |
|---|---|---|---|---|---|
| A | None | NA | 2.2 × 10⁻⁴ (4.9 × 10⁻⁴) | 2.8% (0.04) | 1193 (73) |
| B | D₅ | 95% | 6.6 × 10⁻⁴ (1.9 ×10⁻⁴) | 3.1% (0.05) | 2009 (282) |
| c | D₃^{F} | 57% | 4.7 × 10⁻² (8.0 × 10⁻⁴) | 2.9% (0.06) | 2870 (368) |

The foregoing data indicate that using a pore-former, such as D₅ or D₃^{F}, advantageously increases pre-firing permeability and post-firing strength, without disadvantageously affecting shrinkage. Of particular interest is the significant increase of pre-fired permeability for slurry prepared with D₃^{F} compared to slurry prepared with D₅ even though only half of the D₃^{F} pore-former was removed at 160 °C. This enhanced permeability is thought to be due to phase separation of the D₃^{F} from the binder during the curing step due to reducing miscibility of the D₃^{F} in the binder as it cures and increases in molecular weight. In a separate experiment, only the liquid binders, pore-forming agent and catalyst were mixed together without any solids to form a clear, colorless liquid. A mixture of the binders and D₅ form a clear, colorless liquid and the mixture turns to a clear, colorless solid when cured indicating that any phase separation of the D₅ results in domains smaller than the wavelength of visible light. Phase separation of D₃^{F} from the binders during cure was evidenced by observation of the clear, colorless liquid mixture turning to an opaque white color during cure indicating the formation of a separate domain size larger than the wavelength of visible light. This phase separation leads to pores with larger diameters than those formed with a fully miscible pore-former, such as D₅. The pores in the D₃^{F} fired bar (Formulation C) were observed to be larger than the pores in the D₅ fired bar (Formulation B) by scanning electron microscopy and as estimated by Brunauer-Emmett-Teller surface area analysis. The increased permeability is a desirable property to promote rapid diffusion of oxygen into the center of the body and release of gaseous by-products during firing, which would decrease flaws caused by shrinkage gradients.

### Example 2

Comparable 63 volume % ceramic solids slurry formulations and cylindrical test disks were produced in the same fashion as described for the Comparative Example, but with decamethyl cyclopentasiloxane (D₅) or cyclohexane added to the slurry mixture as a pore-forming agent. Sample formulations D and E were produced, with 30 % of the total slurry volume comprising D₅ or cyclohexane, respectively, with the volume fraction of the reactive siloxane mixture reduced accordingly to maintain a constant 63 volume % ceramic solids loading in the uncured mixture. For control sample F, compacted pellets of dry pressed ceramic powders (silicas, zircon and sodium tetraborate) were prepared by firing to 1050 °C to sinter the particle network to 67.5% of the theoretical density and tested for their permeability, as a representation of the theoretically maximum attainable permeability.

Samples fabricated with slurry formulation D were formed into disks as described for Method 2 of the Comparative Example and cured then dried as described for Examples A-C to volatilize D₅. After being injected into cylindrical molds as in the Comparative Example, samples prepared with formulation E were frozen at -40 °C. They were subsequently placed into a freeze-drier with an initial temperature set-point of -40 °C. The air pressure was reduced to 300mTorr. The temperature was ramped up to -20 °C at 5 °C/hr and then to 20 °C at a rate of 2.5 °C/hr to induce volatilization of cyclohexane. The samples were held at 20 °C for at least 15 hrs before removal from the freeze-drier. The samples were then cured at 50 - 75 °C for at least 15 hr. The slug of cured slurry was removed from the mold and sliced into 0.058" thick disks to obtain the pre-firing samples. Measurement of permeability of discs was as described for the Comparative Example. Mean test values for Formulations D-F are given in Table 3.

**Table 3: Test Data for Fired Ceramic Parts Fabricated from Slurry Compositions Containing 30 Volume % D₅ or Cyclohexane as Pore-Former**

| Sample ID | State of Sample | Pore-Former | Air Permeability (cm²/(sec-atm)) (±95% CI) |
|---|---|---|---|
| A | Pre-fired (Cured then dried at 160 °C) | None | 2.2 × 10⁻⁴ (4.9 × 10⁻⁴) |
| D | Pre-fired (Cured then dried at 160 °C) | D₅ | 4.0 × 10⁻³ (7.4 × 10⁻⁴) |
| E | Pre-fired (Freeze-dried then cured) | Cyclohexane | 2.1 × 10⁻¹ (3.6 × 10⁻²) |
| F | Fired at 1050 °C | None (Pressed Pellets) | 2.8 × 10⁻¹ (3.8 × 10⁻²) |

The foregoing data indicate that using a pore-former, such as D₅ or cyclohexane, advantageously increases pre-firing permeability. In a separate experiment only the liquid binders, pore-forming agent and catalyst were mixed together without any solids to form a clear, colorless liquid. Phase separation of cyclohexane from the binders was evidenced by observation of the mixed liquid components appearing as a clear, colorless liquid at 20 °C, then appearing opaque when cooled to -40 °C, which is below the freezing point of cyclohexane. The formation of porosity by a phase separating pore-forming agent, such as solidified cyclohexane, and the subsequent removal of the phase separated pore-forming agent, allows for permeability values in excess of Formulation A, a slurry that does not contain a pore-forming agent, and approaches that of the binder-free ceramic system.

## Claims

1. A method for creating a porous ceramic structure comprising:
creating a composition, wherein the composition comprises a liquid, a plurality of particles disposed within the liquid, a catalyst material disposed within the liquid, and a pore-forming agent disposed within the liquid;
wherein the liquid comprises one or more siloxane species;
the plurality of particles comprises a ceramic material;
the pore-forming agent comprises an agent that is substantially inert with respect to the liquid, further comprising (a) a silicon-bearing agent that has a number average molecular weight less than 1,300 grams per mole, or (b) a molecule having a molecular mass less than 1,000 grams per mole and a freezing point between -40° C and 25° C that is soluble in the liquid, or any combination of the two;
disposing the composition in any desired shape;
volatilizing at least a portion of the pore-forming agent;
curing the composition to form a green body; and
firing the green body.

2. The method of claim 1, wherein the one or more siloxane species of the liquid comprise an alkenyl functional group, a hydride functional group, or any combination of the two.

3. The method of claim 1 or 2, wherein the pore-forming agent comprises cyclohexane, benzene, p-xylene, o-xylene, cyclooctane, cyclononane, bicyclohexyl, tridecane, dodecane, 3,4-dichlorotoluene, cycloundecane, cycloheptane, 2,2,3,3-tetramethylpentane, and 2,2,5,5-tetramethylhexane, or combinations including one or more of these.

4. The method of claim 3, wherein volatilizing at least a portion of the pore-forming agent occurs before curing the composition to form said green body and comprises lowering a temperature of the composition to below the freezing point of the pore-forming agent, freezing at least a portion of the pore-forming agent to phase-separate said portion of the pore-forming agent from another component of the composition, and reducing atmospheric pressure to below a vapor pressure of the pore-forming agent but above a vapor pressure of another component of the composition at said temperature for a period of time sufficient to volatilize at least some of said portion of the pore-forming agent.

5. The method of any of claims 1 to 4, wherein the pore-forming agent is a silicone-bearing agent comprising: decamethylcyclopentasiloxane; tetramethyltetraphenyltrisiloxane; phenyltrimethylsilane; tetra-n-butylsilane; p-tolyltrimethylsilane; methyltri-n-trioctylsilane; dimethyldiphenylsilane; methyltri-n-hexylsilane, hexamethyl disiloxane; octamethyl trisiloxane; decamethyl tetrasiloxane; dodecamethyl pentasiloxane; phenyl-tris(trimethylsiloxy)silane; methyl-tris(trimethylsiloxy)silane; 3,3,3-trifluoropropyl-tris(trimethylsiloxy)silane; tetrakis(trimethylsiloxy)silane; or a compound of the formula (R₃SiO)₃SiR or (R₃SiO)₄Si wherein R is a monovalent hydrocarbon, a halocarbon, or a halogenated hydrocarbon, and with which the siloxane species of the liquid is not reactive; or a combination including one or more of these.

6. The method of claim 3, 4 or 5, wherein the pore-forming agent is present at a concentration of at least 5 percent by volume of the entire composition.

7. The method of claim 3, 4 or 5, wherein the pore-forming agent is present in the composition at a concentration in a range from 7 volume percent to 35 volume percent of the entire composition.

8. The method of any preceding claim, wherein the pore-forming agent comprises a mixture of components, wherein the components of the mixture have freezing points, boiling points, or vapor pressures at a given temperature that differ from each other.

9. The method of any preceding claim, further comprising disposing the ceramic body within an investment casting mold, and solidifying molten metal within the investment casting mold.

10. The method of any preceding claim, wherein disposing comprises injecting the material via a printer nozzle.

11. The method of any of claims 1 to 9, wherein disposing comprises disposing a plurality of layers of the material in successive deposition actions.

12. A composition comprising:
a liquid that comprises one or more siloxane species;
a plurality of particles, comprising a ceramic material, disposed within the liquid;
a catalyst material disposed within the liquid; and
a pore-forming agent comprising an agent that is substantially inert with respect to the liquid, further comprising (a) a silicon-bearing agent that has a number average molecular weight less than 1,300 grams per mole, or (b) a molecule having a molecular mass less than 1,000 grams per mole and a freezing point between -40° C and 25° C that is soluble in the liquid, or any combination of the two,
wherein the composition includes at least 30 volume percent of ceramic powder.

13. The composition of claim 12, wherein the pore-forming agent comprises cyclohexane, benzene, p-xylene, o-xylene, cyclooctane, cyclononane, bicyclohexyl, tridecane, dodecane, 3,4-dichlorotoluene, cycloundecane, cycloheptane, 2,2,3,3-tetramethylpentane, and 2,2,5,5-tetramethylhexane, or combinations including one or more of these.

14. The composition of claim 12 or 13, wherein the pore-forming agent is a silicone-bearing agent comprising decamethylcyclopentasiloxane; tetramethyltetraphenyltrisiloxane; phenyltrimethylsilane; tetra-n-butylsilane; p-tolyltrimethylsilane; methyltri-n-trioctylsilane; dimethyldiphenylsilane; methyltri-n-hexylsilane, hexamethyl disiloxane; octamethyl trisiloxane; decamethyl tetrasiloxane; dodecamethyl pentasiloxane; phenyl-tris(trimethylsiloxy)silane; methyl-tris(trimethylsiloxy)silane; 3,3,3-trifluoropropyl-tris(trimethylsiloxy)silane; tetrakis(trimethylsiloxy)silane; and a compound of the formula (R₃SiO)₃SiR or (R₃SiO)₄Si wherein R is a monovalent hydrocarbon, a halocarbon, or a halogenated hydrocarbon, and with which the siloxane species of the liquid is not reactive; or a combination including one or more of these.

15. The composition of claim 12, 13 or 14, wherein the pore-forming agent is present at a concentration of at least 5 percent by volume of the entire composition.

## Patentansprüche

1. Verfahren zum Erzeugen einer porösen Keramikstruktur, umfassend:
Erzeugen einer Zusammensetzung, wobei die Zusammensetzung eine Flüssigkeit, eine Vielzahl von Partikeln, die innerhalb der Flüssigkeit angeordnet sind, ein Beschleunigermaterial, das innerhalb der Flüssigkeit angeordnet ist, und ein porenbildendes Mittel, das innerhalb der Flüssigkeit angeordnet ist, umfasst;
wobei die Flüssigkeit eine oder mehrere Siloxanspezies umfasst;
die Vielzahl von Partikeln ein keramisches Material umfasst;
das porenbildende Mittel ein Mittel umfasst, das im Wesentlichen inert gegenüber der Flüssigkeit ist, ferner umfassend (a) ein siliziumhaltiges Mittel, das ein zahlenmittleres Molekulargewicht von weniger als 1.300 Gramm pro Mol aufweist, oder (b) ein Molekül mit einer Molekülmasse von weniger als 1.000 Gramm pro Mol und einem Gefrierpunkt zwischen -40 °C und 25 °C, das in der Flüssigkeit löslich ist, oder eine beliebige Kombination der beiden;
Anordnen der Zusammensetzung in einer beliebigen gewünschten Form;
Verflüchtigung mindestens eines Teils des porenbildenden Mittels;
Härten der Zusammensetzung, um einen Grünkörper zu bilden; und
Brennen des Grünkörpers.

2. Verfahren nach Anspruch 1, wobei die eine oder die mehreren Siloxanspezies der Flüssigkeit eine funktionelle Alkenylgruppe, eine funktionelle Hydridgruppe oder eine beliebige Kombination der beiden umfassen.

3. Verfahren nach Anspruch 1 oder 2, wobei das porenbildende Mittel Cyclohexan, Benzol, p-Xylol, o-Xylol, Cyclooctan, Cyclononan, Bicyclohexyl, Tridecan, Dodecan, 3,4-Dichlortoluol, Cycloundecan, Cycloheptan, 2,2,3,3-Tetramethylpentan und 2,2,5,5-Tetramethylhexan oder Kombinationen einschließlich eines oder mehrerer davon umfasst.

4. Verfahren nach Anspruch 3, wobei das Verflüchtigen mindestens eines Teils des porenbildenden Mittels vor dem Härten der Zusammensetzung erfolgt, um den Grünkörper zu bilden, und das Absenken einer Temperatur der Zusammensetzung unter den Gefrierpunkt des porenbildenden Mittels, das Einfrieren mindestens eines Teils des porenbildenden Mittels, um den Anteil des porenbildenden Mittels von einer anderen Komponente der Zusammensetzung phasenzutrennen, und das Reduzieren des atmosphärischen Drucks auf unter einen Dampfdruck des porenbildenden Mittels, aber über einem Dampfdruck einer anderen Komponente der Zusammensetzung bei der Temperatur für einen Zeitraum, der ausreicht, um mindestens einen Teil des Anteils des porenbildenden Mittels zu verflüchtigen, umfasst.

5. Verfahren nach einem der Ansprüche 1 bis 4, wobei das porenbildende Mittel ein siliziumhaltiges Mittel ist, umfassend: Decamethylcyclopentasiloxan; Tetramethyltetraphenyltrisiloxan; Phenyltrimethylsilan; Tetra-n-Butylsilan; p-Tolyltrimethylsilan; Methyltri-n-Trioctylsilan; Dimethyldiphenylsilan; Methyltri-n-Hexylsilan, Hexamethyldisiloxan; Octamethyltrisiloxan; Decamethyltetrasiloxan; Dodecamethylpentasiloxan; Phenyl-tris (Trimethylsiloxy)-Silan; Methyl-tris (Trimethylsiloxy)-Silan; 3,3,3-Trifluorpropyl-tris (Trimethylsiloxy)-Silan; Tetrakis (Trimethylsiloxy)-Silan oder eine Verbindung der Formel (R₃SiO)₃SiR oder (R₃SiO)₄Si, wobei R ein einwertiger Kohlenwasserstoff, ein Halogenkohlenwasserstoff oder ein halogenierter Kohlenwasserstoff ist und mit dem die Siloxanspezies der Flüssigkeit nicht reaktiv ist; oder eine Kombination einschließlich einer oder mehrerer davon.

6. Verfahren nach Anspruch 3, 4 oder 5, wobei das porenbildende Mittel in einer Konzentration von mindestens 5 Volumenprozent der gesamten Zusammensetzung vorliegt.

7. Verfahren nach Anspruch 3, 4 oder 5, wobei das porenbildende Mittel in der Zusammensetzung in einer Konzentration in einem Bereich von 7 Volumenprozent bis 35 Volumenprozent der gesamten Zusammensetzung vorhanden ist.

8. Verfahren nach einem der vorstehenden Ansprüche, wobei das porenbildende Mittel eine Mischung von Komponenten umfasst, wobei die Komponenten der Mischung Gefrierpunkte, Siedepunkte oder Dampfdrücke bei einer gegebenen Temperatur aufweisen, die sich voneinander unterscheiden.

9. Verfahren nach einem der vorstehenden Ansprüche, ferner umfassend das Anordnen des Keramikkörpers innerhalb einer Feingussform und das Verfestigen von geschmolzenem Metall innerhalb der Feingussform.

10. Verfahren nach einem der vorstehenden Ansprüche, wobei das Anordnen das Einspritzen des Materials über eine Druckerdüse umfasst.

11. Verfahren nach einem der Ansprüche 1 bis 9, wobei das Anordnen das Anordnen einer Vielzahl von Schichten des Materials in aufeinanderfolgenden Abscheidevorgängen umfasst.

12. Zusammensetzung, umfassend:
eine Flüssigkeit, die eine oder mehrere Siloxanspezies umfasst;
eine Vielzahl von Partikeln, die ein Keramikmaterial umfassen, das innerhalb der Flüssigkeit angeordnet ist;
ein Beschleunigermaterial, das innerhalb der Flüssigkeit angeordnet ist; und
ein porenbildendes Mittel, das ein Mittel umfasst, das im Wesentlichen inert in Bezug auf die Flüssigkeit ist, ferner umfassend (a) ein siliziumhaltiges Mittel, das ein zahlenmittleres Molekulargewicht von weniger als 1.300 Gramm pro Mol aufweist, oder (b) ein Molekül mit einer Molekülmasse von weniger als 1.000 Gramm pro Mol und einem Gefrierpunkt zwischen -40 °C und 25 °C, das in der Flüssigkeit löslich ist, oder eine beliebige Kombination der beiden,
wobei die Zusammensetzung zu mindestens 30 Volumenprozent Keramikpulver einschließt.

13. Zusammensetzung nach Anspruch 12, wobei das porenbildende Mittel Cyclohexan, Benzol, p-Xylol, o-Xylol, Cyclooctan, Cyclononan, Bicyclohexyl, Tridecan, Dodecan, 3,4-Dichlortoluol, Cycloundecan, Cycloheptan, 2,2,3,3-Tetramethylpentan und 2,2,5,5-Tetramethylhexan oder Kombinationen einschließlich eines oder mehrerer davon umfasst.

14. Zusammensetzung nach Anspruch 12 oder 13, wobei das porenbildende Mittel ein siliziumhaltiges Mittel ist, umfassend Decamethylcyclopentasiloxan; Tetramethyltetraphenyltrisiloxan; Phenyltrimethylsilan; Tetra-n-Butylsilan; p-Tolyltrimethylsilan; Methyltri-n-Trioctylsilan; Dimethyldiphenylsilan; Methyltri-n-Hexylsilan, Hexamethyldisiloxan; Octamethyltrisiloxan; Decamethyltetrasiloxan; Dodecamethylpentasiloxan; Phenyl-tris (Trimethylsiloxy)-Silan; Methyl-tris (Trimethylsiloxy)-Silan; 3,3,3-Trifluorpropyl-tris (Trimethylsiloxy)-Silan; Tetrakis (Trimethylsiloxy)-Silan und eine Verbindung der Formel (R₃SiO)₃SiR oder (R₃SiO)₄Si, wobei R ein einwertiger Kohlenwasserstoff, ein Halogenkohlenwasserstoff oder ein halogenierter Kohlenwasserstoff ist und mit dem die Siloxanspezies der Flüssigkeit nicht reaktiv ist; oder eine Kombination einschließlich einer oder mehrerer davon.

15. Zusammensetzung nach Anspruch 12, 13 oder 14, wobei das porenbildende Mittel in einer Konzentration von mindestens 5 Volumenprozent der gesamten Zusammensetzung vorliegt.

## Revendications

1. Procédé de création d'une structure céramique poreuse comprenant :
la création d'une composition, la composition comprenant un liquide, une pluralité de particules disposées à l'intérieur du liquide, un matériau catalyseur disposé à l'intérieur du liquide, et un agent porogène en place à l'intérieur du liquide ;
le liquide comprenant une ou plusieurs espèces de siloxane ;
la pluralité de particules comprend un matériau céramique ;
l'agent porogène comprend un agent qui est sensiblement inerte par rapport au liquide, comprenant en outre (a) un agent portant du silicium qui a une masse moléculaire moyenne en nombre inférieure à 1 300 grammes par mole, ou (b) une molécule ayant une masse moléculaire inférieure à 1 000 grammes par mole et un point de congélation entre -40 °C et 25 °C qui est soluble dans le liquide, ou n'importe quelle combinaison des deux ;
mettre en place la composition dans n'importe quelle forme souhaitée ;
volatiliser au moins une partie de l'agent porogène,
durcir la composition pour former un corps vert ; et
cuire le corps vert.

2. Procédé selon la revendication 1, dans lequel la ou les espèces de siloxane du liquide comprennent un groupe fonctionnel alcényle, un groupe fonctionnel d'hydrure, ou n'importe quelle combinaison des deux.

3. Procédé selon la revendication 1 ou 2, dans lequel l'agent porogène comprend du cyclohexane, du benzène, du p-xylène, de l'o-xylène, du cyclooctane, du cyclononane, du bicyclohexyle, du tridécane, du dodécane, du 3,4-dichlorotoluène, du cycloundécane, du cycloheptane, du 2,2,3,3-tétraméthylpentane, et du 2,2,5,5-tétraméthylhexane, ou des combinaisons incluant un ou plusieurs de ceux-ci.

4. Procédé selon la revendication 3, dans lequel la volatilisation d'au moins une partie de l'agent porogène se produit avant le durcissement de la composition pour former ledit corps vert et comprend l'abaissement d'une température de la composition en dessous du point de congélation de l'agent porogène, la congélation d'au moins une partie de l'agent porogène pour séparer en phase d'un autre composant de la composition ladite partie de l'agent porogène, et la réduction de la pression atmosphérique en dessous d'une pression de vapeur de l'agent porogène mais au-dessus d'une pression de vapeur d'un autre composant de la composition à ladite température pendant une période de temps suffisante pour volatiliser au moins une partie de ladite partie de l'agent porogène.

5. Procédé selon l'une quelconque des revendications 1 à 4, dans lequel l'agent porogène est un agent porteur de silicone comprenant : du décaméthylcyclopentasiloxane ; tétraméthyltétraphényltrisiloxane ; phényltriméthylsilane ; tétra-n-butylsilane ; p-tolytriméthylsilane ; méthyltri-n-trioctylsilane ; diméthyldiphénylsilane ; méthyltri-n-hexylsilane, hexaméthyl disiloxane ; octaméthyl trisiloxane ; décaméthyle tétrasiloxane ; dodécaméthyle pentasiloxane ; phényl-tris(triméthylsiloxy) silane ; méthyl-tris(triméthylsiloxy) silane ; 3,3,3-trifluoropropyl-tris (triméthylsiloxy) silane ; tétrakis(triméthylsiloxy) silane ; ou un composé de formule (R₃SiO)₃SiR ou (R₃SiO)₄Si où R est un hydrocarbure monovalent, un halocarbure ou un hydrocarbure halogéné, et avec lequel l'espèce siloxane du liquide n'est pas réactive ; ou une combinaison incluant un ou plusieurs de ceux-ci.

6. Procédé selon la revendication 3, 4 ou 5, dans lequel l'agent porogène est présent à une concentration d'au moins 5 pour cent en volume de la composition entière.

7. Procédé selon la revendication 3, 4 ou 5, dans lequel l'agent porogène est présent dans la composition à une concentration dans une plage allant de 7 pour cent en volume à 35 pour cent en volume de la composition entière.

8. Procédé selon une quelconque revendication précédente, dans lequel l'agent porogène comprend un mélange de composants, les composants du mélange ayant des points de congélation, des points d'ébullition, ou des pressions de vapeur à une température donnée qui diffèrent les uns des autres.

9. Procédé selon une quelconque revendication précédente, comprenant en outre la mise en place du corps céramique au sein d'un moule de coulée de précision, et la solidification du métal fondu au sein du moule de coulée de précision.

10. Procédé selon une quelconque revendication précédente, dans lequel la mise en place comprend l'injection du matériau par l'intermédiaire d'une buse d'imprimante.

11. Procédé selon l'une quelconque des revendications 1 à 9, dans lequel la mise en place comprend la mise en place d'une pluralité de couches du matériau dans des actions de dépôt successives.

12. Composition comprenant :
un liquide qui comprend une ou plusieurs espèces de siloxane ;
une pluralité de particules, comprenant un matériau céramique, disposé à l'intérieur du liquide ;
un matériau catalyseur disposé à l'intérieur du liquide ; et
un agent porogène comprenant un agent qui est sensiblement inerte par rapport au liquide, comprenant en outre (a) un agent porteur de silicium qui a une masse moléculaire moyenne en nombre inférieure à 1 300 grammes par mole, ou (b) une molécule ayant une masse moléculaire inférieure à 1 000 grammes par mole et un point de congélation entre -40 °C et 25 °C qui est soluble dans le liquide, ou n'importe quelle combinaison des deux,
la composition incluant au moins 30 pour cent en volume de poudre céramique.

13. Composition selon la revendication 12, dans laquelle l'agent porogène comprend du cyclohexane, du benzène, du p-xylène, de l'o-xylène, du cyclooctane, du cyclononane, du bicyclohexyle, du tridécane, du dodécane, du 3,4-dichlorotoluène, du cycloundécane, du cyclo-heptane, du 2,2,3,3-tétraméthylpentane, et du 2,2,5,5-tétraméthylhexane, ou des combinaisons incluant un ou plusieurs de ceux-ci.

14. Composition selon la revendication 12 ou 13, dans laquelle l'agent porogène est un agent porteur de silicone comprenant du décaméthylcyclopentasiloxane ; tétraméthyltétraphényltrisiloxane ; phényltriméthylsilane ; tétra-n-butylsilane ; p-tolytriméthylsilane ; méthyltri-n-trioctylsilane ; diméthyldiphénylsilane ; méthyltri-n-hexylsilane, hexaméthyl disiloxane ; octaméthyltrisiloxane ; décaméthyle tétrasiloxane ; le dodécaméthyl pentasiloxane ; le phényl-tris (triméthylsiloxy) silane ; méthyl-tris (triméthylsiloxy) silane ; le 3,3,3-trifluoropropyltris (triméthylsiloxy) silane ; tétrakis (triméthylsiloxy) silane ; et un composé de formule (R₃SiO)₃SiR ou (R₃SiO)₄Si où R est un hydrocarbure monovalent, un halocarbure ou un hydrocarbure halogéné, et avec lequel l'espèce siloxane du liquide n'est pas réactive ; ou une combinaison incluant un ou plusieurs de ceux-ci.

15. Composition selon la revendication 12, 13 ou 14, dans laquelle l'agent porogène est présent à une concentration d'au moins 5 pour cent en volume de la composition entière.
